(19) Europäisches Patentamt
European Patent Office
Office européen des brevets

(11) **EP 4 489 102 A1**

(12) **EUROPEAN PATENT APPLICATION**
published in accordance with Art. 153(4) EPC

(43) Date of publication:
**08.01.2025 Bulletin 2025/02**

(21) Application number: **22929363.4**

(22) Date of filing: **04.03.2022**

(51) International Patent Classification (IPC):
*H01M 4/133* (2010.01)

(52) Cooperative Patent Classification (CPC):
**H01M 4/133; Y02E 60/10**

(86) International application number:
**PCT/CN2022/079190**

(87) International publication number:
**WO 2023/164915 (07.09.2023 Gazette 2023/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventor: **WANG, Yingying**
**Ningde, Fujian 352100 (CN)**

(74) Representative: **Icosa**
**83 avenue Denfert-Rochereau**
**75014 Paris (FR)**

(54) **ELECTROCHEMICAL DEVICE AND ELECTRONIC DEVICE**

(57) This application provides an electrochemical device including a negative electrode. The negative electrode includes a negative electrode current collector and a negative electrode active material layer. The negative electrode active material layer includes a negative electrode active material and a negative electrode additive. The negative electrode active material contains graphite. Orientation index OI of the negative electrode active material is less than or equal to 11. With thermogravimetric analysis used, weight loss rate of the negative electrode active material layer in a temperature range of 25°C to 600°C is $W_T$%, satisfying $1 \leq W_T \leq 2.5$. The electrochemical device achieves balance among high volumetric energy density, excellent cycling performance, and good low-temperature rate performance. Further provided is an electronic device including the electrochemical device.

FIG. 2

**Description**

**TECHNICAL FIELD**

This application relates to the field of energy storage and specifically to an electrochemical device and an electronic device.

**BACKGROUND**

As a new type of energy storage device, lithium-ion batteries are widely used in 3C digital products, electric tools, energy storage grids, aerospace, and other fields. With the development of science and technology, the performance requirements for lithium-ion batteries are becoming increasingly higher, so parameters such as energy density and charge-discharge power of batteries urgently need to be improved under the premise of guaranteeing safety. In lithium-ion batteries, positive and negative electrode materials are the key substances that determine battery performance. In the prior art, a graphite negative electrode active material with low degree of orientation has small cycling swelling in a direction Z and excellent kinetic performance, and can effectively reduce thickness swelling rate of lithium-ion batteries. However, graphite of low degree of orientation is often not easy to disperse, resulting in poor slurry uniformity, which in turn leads to high deformation rate of lithium-ion batteries, limiting large-scale application of lithium-ion batteries.

**SUMMARY**

In view of deficiencies of the prior art, this application provides an electrochemical device and an electronic device including such electrochemical device. The electrochemical device provided in this application achieves balance among high volumetric energy density, excellent cycling performance, and good low-temperature rate performance.

According to a first aspect, this application provides an electrochemical device including a negative electrode, where the negative electrode includes a negative electrode current collector and a negative electrode active material layer, the negative electrode active material layer includes a negative electrode active material and a negative electrode additive, and the negative electrode active material contains graphite; where orientation index OI of the negative electrode active material is less than or equal to 11, and with thermogravimetric analysis used, weight loss rate of the negative electrode active material layer in a temperature range of 25°C to 600°C is $W_T$%, satisfying $1 \leq W_T \leq 2.5$. In this application, the $W_T$ value falling within the above range allows for optimal cycling performance and comprehensive rate performance of the electrochemical device. Excessively small $W_T$ value leads to poor slurry uniformity for preparing the negative electrode active material layer, resulting in low adhesion force between the negative electrode active material layer and the current collector, and thus during cycling, swelling of graphite in directions X and Y cannot be suppressed, leading to increased cycling swelling rate and deformation rate of the electrochemical device. Excessively large $W_T$ value leads to excessively low amount of graphite in the negative electrode active material, resulting in decreased ionic conductivity of an electrode plate, and leading to reduced discharge rate of the electrochemical device.

According to some embodiments of this application, $6 \leq OI \leq 10$. In this application, the orientation index OI of the negative electrode active material is a ratio of a peak area of (004) plane to a peak area of (110) plane obtained by testing the negative electrode active material using X-ray diffraction.

According to some embodiments of this application, tap density TD of the negative electrode active material is less than or equal to 0.9 g/cm$^3$.

According to some embodiments of this application, with thermogravimetric analysis used, the weight loss rate of the negative electrode active material layer in a temperature range of 200°C to 360°C is a%, and the weight loss rate of the negative electrode active material layer in a temperature range of 360°C to 450°C is b%, satisfying at least one of the following conditions: (I) a + b < 2.5; (II) a ≥ 1.5b; or (III) a ≥ (-0.0135 × TD + 0.0263) × 100.

According to some embodiments of this application, the negative electrode active material layer satisfies at least one of condition (a) or (b): (a) $0.8 \leq a \leq 2$, and $0.1 \leq b \leq 0.7$; or (b) $0.6 \leq TD \leq 0.9$.

According to some embodiments of this application, $1.1 <\_ a < 1.9$, and $0.2 \leq b \leq 0.5$.

According to some embodiments of this application, with thermogravimetric analysis used, the weight loss rate of the negative electrode active material layer in a temperature range of 200°C to 360°C is a%, and the weight loss rate of the negative electrode active material layer in a temperature range of 360°C to 450°C is b%, satisfying a + b < 2.5. Excessively large a + b value leads to excessively low amount of graphite in the negative electrode active material, thus resulting in decreased ionic conductivity of the electrode plate, and leading to reduced discharge rate of the electrochemical device.

According to some embodiments of this application, with thermogravimetric analysis used, the weight loss rate of the negative electrode active material layer in a temperature range of 200°C to 360°C is a%, satisfying $0.8 \leq a \leq 2.2$. In some embodiments, $0.8 \leq a \leq 2.0$. In some embodiments, $1.1 \leq a \leq 1.9$. In this application, the value of a is related to amount of the negative electrode additive in the negative electrode active material layer, and larger value of a indicates higher amount of the negative electrode additive in the negative electrode active material layer. Excessively large value of a correspondingly indicates excessively low amount of graphite in the negative electrode active material and decreased ionic conductivity of the electrode plate, leading to reduced discharge rate performance of the electrochemical device. Excessively small value of a indicates excessively low amount of the negative electrode additive, leading to poor slurry uniformity for preparing the negative electrode active material layer, resulting in low adhesion force between the negative electrode active material layer and the current collector, and thus leading to increased cycling swelling rate and deformation rate of the electrochemical device.

According to some embodiments of this application, with thermogravimetric analysis used, the weight loss rate of the negative electrode active material layer in a temperature range of 360°C to 450°C is b%, satisfying $0.1 \leq b \leq 0.7$. In some embodiments, $0.2 \leq b \leq 0.5$. Larger b value correspondingly leads to higher adhesion force of the electrode plate. High adhesion force can inhibit the swelling of graphite in the directions X and Y, thereby reducing the cycling deformation rate and increasing the cycling capacity retention rate of the electrochemical device. However, excessively large b value reduces the ionic conductivity of the electrode plate, leading to reduced discharge rate of the electrochemical device.

According to some embodiments of this application, with thermogravimetric analysis used, the weight loss rate of the negative electrode active material layer in a temperature range of 200°C to 360°C is a%, and tap density TD of the negative electrode active material is less than or equal to 0.9 g/cm$^3$, satisfying $a \geq (-0.0135 \times TD + 0.0263) \times 100$. TD and a satisfying the relational expression $a \geq (-0.0135 \times TD + 0.0263) \times 100$ allows for good slurry uniformity of the negative electrode active material layer, so that a uniformly dispersed adhesion network can be formed in the negative electrode active material layer, conducive to increasing the cycling capacity retention rate and reducing the cycling deformation rate of the electrochemical device.

According to some embodiments of this application, with Fourier transform infrared spectroscopy test used, the negative electrode active material layer contains a substance having an absorption peak in a range of 1540 cm$^{-1}$ to 1630 cm$^{-1}$ in a spectrogram. In this application, in the Fourier transform infrared spectroscopy test spectrogram, the absorption peak in the range of 1540 cm$^{-1}$ to 1630 cm$^{-1}$ represents the stretching vibration of a carboxyl group.

According to some embodiments of this application, the negative electrode additive includes at least one of hydroxyalkyl carboxymethyl cellulose or an alkali metal salt of hydroxyalkyl carboxymethyl cellulose. In some embodiments, hydroxyalkyl carboxymethyl cellulose includes at least one $C_2$ to $C_6$ hydroxyalkyl carboxymethyl cellulose. In some embodiments, the alkali metal salt of hydroxyalkyl carboxymethyl cellulose includes at least one alkali metal salt of $C_2$ to $C_6$ hydroxyalkyl carboxymethyl cellulose. According to some embodiments of this application, the alkali metal salt of hydroxyalkyl carboxymethyl cellulose includes at least one of an alkali metal salt of hydroxyethyl carboxymethyl cellulose or an alkali metal salt of hydroxypropyl carboxymethyl cellulose. In some embodiments, the alkali metal is lithium, sodium, potassium, rubidium, or cesium.

According to some embodiments of this application, the negative electrode additive includes at least one of hydroxypropyl carboxymethyl cellulose, lithium hydroxypropyl carboxymethyl cellulose, sodium hydroxypropyl carboxymethyl cellulose, hydroxyethyl carboxymethyl cellulose, lithium hydroxyethyl carboxymethyl cellulose, or sodium hydroxyethyl carboxymethyl cellulose.

Artificial graphite with low OI value (OI ≤ 11) has strong isotropy and the advantages of low swelling in a direction Z and excellent kinetic performance. During charging, lithium ions can quickly intercalate into graphite with low OI value, a certain thickness swelling is released in the directions X and Y, thereby relatively reducing the swelling in the direction Z, which can in turn reduce the cycling swelling rate of the electrochemical device. However, due to the swelling of the electrode plate in the directions X and Y, the electrode plate is prone to film peeling, with high deformation rate, which in turn reduces the cycling capacity retention rate of the electrochemical device. In addition, low OI value graphite is mostly formed by accumulation of secondary particles, and in most cases, low OI value graphite is often accompanied by low tap density. Such graphite with low OI value (OI ≤ 11) and low TD (TD ≤ 0.9) is not easy to disperse and often requires a large amount of dispersant to guarantee slurry uniformity. In conventional negative electrode plates, sodium carboxymethyl cellulose (CMC) is used as a dispersant. Although CMC can disperse and suspend graphite and bind graphite particles, due to high brittleness of CMC, an adhesion network in an active material layer is easily damaged during cold pressing, leading to limited improvement on the cycling deformation rate of the electrochemical device. In this application, a hydroxyalkyl carboxymethyl cellulose dispersant with excellent flexibility is added to the negative electrode, which can effectively reduce the damage to the adhesion network caused by brittleness of the active material layer when subjected to rolling external force/swelling and contraction, so that the electrode plate still maintains high adhesion force and ionic conductivity after rolling and long cycles, thereby allowing for high volumetric energy density, excellent cycling performance, and low-temperature rate performance of the electrochemical device.

According to some embodiments of this application, for the negative electrode additive, degree of substitution of hydroxyalkyl group is 0.1 to 0.3. In some embodiments, for the negative electrode additive, the degree of substitution of hydroxyalkyl group is 0.16 to 0.28. In some embodiments, for the negative electrode additive, degree of substitution of carboxymethyl group is 0.5 to 0.9. As the degree of substitution of hydroxyalkyl group increases, the negative electrode additive has increased flexibility and decreased brittleness. After the electrode plate containing the negative electrode additive is rolled, the damage to the adhesion network under external force is reduced, and the adhesion performance is improved. In addition, the negative electrode additive with high flexibility can also reduce the brittle cracking of adhesion caused by swelling and contraction of graphite during cycling, conducive to improving the cycling capacity retention rate and reducing the cycling deformation rate of the electrochemical device. However, excessively high degree of substitution of hydroxyalkyl group leads to decreased bulk strength of the negative electrode additive, resulting in decreased adhesion force of a corresponding electrode plate.

According to some embodiments of this application, the negative electrode additive includes at least one alkali metal salt of hydroxyalkyl carboxymethyl cellulose; and the negative electrode active material layer includes a region A and a region B, where a ratio of an amount of alkali metal element in the region A to the amount of alkali metal element in the region B is 0.8 to 1.2, the region A is a region from the center in a thickness direction of the negative electrode active material layer to a surface side of the negative electrode active material layer, and the region B is a region from the center in the thickness direction of the negative electrode active material layer to a side of the negative electrode current collector. In some embodiments, the negative electrode additive includes at least one alkali metal salt of $C_2$ to $C_6$ hydroxyalkyl carboxymethyl cellulose, where the ratio of the amount of alkali metal element in the region A to the amount of alkali metal element in the region B is 0.8 to 1.2. In some embodiments, the negative electrode additive includes lithium hydroxypropyl carboxymethyl cellulose, where a ratio of an amount of lithium element in the region A to the amount of lithium element in the region B is 0.8 to 1.2.

According to some embodiments of this application, the negative electrode active material layer further includes a binder. In some embodiments, the binder includes at least one of styrene-butadiene rubber, polyacrylic acid, polyacrylate salt, polyimide, polyamideimide, polyvinylidene fluoride, polyvinylidene difluoride, polytetrafluoroethylene, water-borne acrylic resin, polyvinyl formal, or styrene-acrylic copolymer resin.

According to some embodiments of this application, the electrochemical device satisfies at least one of condition (i) or (ii): (i) an adhesion force between the negative electrode active material layer and the negative electrode current collector is 8 N/m to 15 N/m; or (ii) ionic conductivity of the negative electrode is 0.1 S/cm to 0.4 S/cm.

According to a second aspect, this application provides an electronic device including the electrochemical device according to the second aspect.

In this application, combined use of graphite with low orientation index (orientation index $\leq 11$) and low tap density (tap density $<\_ 0.9$) and hydroxyalkyl carboxymethyl cellulose additive and optimized ratio allow for preparation of negative electrode plate with high active material amount, thus allowing the electrochemical device containing such electrode plate to achieve balance among high volumetric energy density, excellent cycling performance, and good low-temperature rate performance.

## BRIEF DESCRIPTION OF DRAWINGS

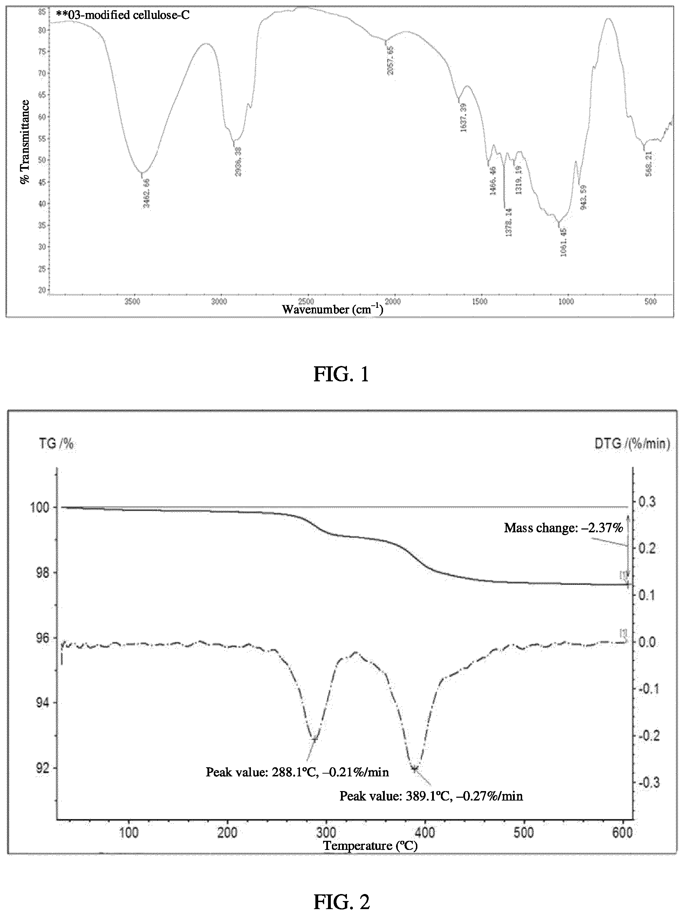

FIG. 1 is an infrared spectrogram of a negative electrode additive in an electrochemical device according to some embodiments of this application.

FIG. 2 is a graph showing thermogravimetric curves of a negative electrode active material layer in an electrochemical device according to some embodiments of this application.

## DETAILED DESCRIPTION

The following further describes this application with reference to some specific embodiments. It should be understood that these specific embodiments are merely intended to illustrate this application but not to limit the scope of this application.

I. Electrochemical device

This application provides an electrochemical device including a negative electrode, where the negative electrode includes a negative electrode current collector and a negative electrode active material layer, the negative electrode active material layer includes a negative electrode active material and a negative electrode additive, and the negative electrode active material contains graphite; where orientation index OI of the negative electrode active material is less than or equal to 11, and with thermogravimetric analysis used, weight loss rate of the negative electrode active material layer in a temperature range of 25°C to 600°C is $W_T$%, satisfying $1 \leq W_T \leq 2.5$. In this application, the $W_T$ value falling within the above range allows for optimal cycling performance and comprehensive rate performance of the electrochemical device. Excessively small $W_T$ value leads to poor slurry uniformity for preparing the negative electrode active material layer, resulting in low adhesion force between the negative electrode active material layer and the current collector, and thus during cycling, swelling of graphite in directions X and Y cannot be suppressed, leading to increased cycling swelling rate and deformation rate of the electrochemical device. Excessively large $W_T$ value leads to excessively low amount of graphite in the negative electrode active material, resulting in decreased ionic conductivity of an electrode plate. In some embodiments, $W_T$ is 1.1, 1.2, 1.3, 1.4, 1.5, 1.6, 1.7, 1.8, 1.9, 2.0, 2.1, 2.2, 2.3, or 2.4, or in a range defined by any two of these values. In some embodiments, $1.5 \leq W_T \leq 2.2$.

According to some embodiments of this application, OI is 5.0, 5.5, 6.0, 6.5, 7, 7.5, 8, 8.5, 9, 9.5, 10, or 10.5, or in a range defined by any two of these values. In some embodiments, $6 \leq OI \leq 10$. In this application, the orientation index OI of the negative electrode active material is a ratio of a peak area of (004) plane to a peak area of (110) plane obtained by testing the negative electrode active material using X-ray diffraction.

According to some embodiments of this application, tap density TD of the negative electrode active material is less than or equal to 0.9 g/cm$^3$. In some embodiments, TD is 0.5, 0.55, 0.6, 0.65, 0.7, 0.75, 0.8, 0.85, or 0.9, or in a range defined by any two of these values. In some embodiments, $0.6 \leq TD \leq 0.9$.

According to some embodiments of this application, with thermogravimetric analysis used, the weight loss rate of the negative electrode active material layer in a temperature range of 200°C to 360°C is a%, and the weight loss rate of the negative electrode active material layer in a temperature range of 360°C to 450°C is b%, satisfying a + b < 2.5. Excessively large a + b value leads to excessively low amount of graphite in the negative electrode active material, thus resulting in decreased ionic conductivity of the electrode plate, and leading to reduced discharge rate of the electrochemical device. In some embodiments, a + b is 1.1, 1.2, 1.3, 1.4, 1.5, 1.6, 1.7, 1.8, 1.9, 2.0, 2.1, 2.2, 2.3, or 2.4, or in a range defined by any two of these values. In some embodiments, $1.5 \leq a + b \leq 2.2$.

According to some embodiments of this application, with thermogravimetric analysis used, the weight loss rate of the negative electrode active material layer in a temperature range of 200°C to 360°C is a%, satisfying $0.8 \leq a \leq 2.2$. In some embodiments, a is 0.9, 1.0, 1.15, 1.2, 1.3, 1.4, 1.5, 1.6, 1.7, 1.8, 1.95, 2.0, or 2.1, or in a range defined by any two of these values. In some embodiments, $0.8 \leq a \leq 2.0$. In some embodiments, $1.1 \leq a \leq 1.9$. In this application, the value of a is related to amount of the negative electrode additive in the negative electrode active material layer, and larger value of a indicates higher amount of the negative electrode additive in the negative electrode active material layer. Excessively large value of a correspondingly indicates excessively low amount of graphite in the negative electrode active material and decreased ionic conductivity of the electrode plate, leading to reduced discharge rate performance of the electrochemical device. Excessively small value of a indicates excessively low amount of the negative electrode additive, leading to poor slurry uniformity for preparing the negative electrode active material layer, resulting in low adhesion force between the negative electrode active material layer and the current collector, and thus leading to increased cycling swelling rate and deformation rate of the electrochemical device.

According to some embodiments of this application, with thermogravimetric analysis used, the weight loss rate of the negative electrode active material layer in a temperature range of 360°C to 450°C is b%, satisfying $0.1 \leq b \leq 0.7$. In some embodiments, b is 0.15, 0.25, 0.3, 0.4, 0.55, or 0.6, or in a range defined by any two of these values. In some embodiments, $0.2 \leq b \leq 0.5$. Larger b value correspondingly leads to higher adhesion force of the electrode plate. High adhesion force can inhibit the swelling of graphite in the directions X and Y, thereby reducing the cycling deformation rate and increasing the cycling capacity retention rate of the electrochemical device. However, excessively large b value reduces the ionic conductivity of the electrode plate, leading to reduced discharge rate of the electrochemical device.

According to some embodiments of this application, with thermogravimetric analysis used, the weight loss rate of the negative electrode active material layer in a temperature range of 200°C to 360°C is a%, and tap density TD of the negative electrode active material is less than or equal to 0.9 g/cm$^3$, satisfying $a \geq (\text{-0.0135} \times TD + 0.0263) \times 100$. TD and a satisfying the relational expression $a \geq (\text{-0.0135} \times TD + 0.0263) \times 100$ allows for good slurry uniformity of the negative electrode active material layer, so that a uniformly dispersed adhesion network can be formed in the negative electrode active material layer, conducive to increasing the cycling capacity retention rate and reducing the cycling deformation rate of the electrochemical device.

According to some embodiments of this application, with Fourier transform infrared spectroscopy test used, the negative electrode active material layer contains a substance having an absorption peak in a range of 1540 cm$^{-1}$ to 1630 cm$^{-1}$ in a spectrogram. In this application, in the Fourier transform infrared spectroscopy test spectrogram, the absorption peak in the range of 1540 cm$^{-1}$ to 1630 cm$^{-1}$ represents the stretching vibration of a carboxyl group.

According to some embodiments of this application, the negative electrode additive includes at least one of hydroxyalkyl carboxymethyl cellulose or an alkali metal salt of hydroxyalkyl carboxymethyl cellulose. In some embodiments, hydroxyalkyl carboxymethyl cellulose includes at least one $C_2$ to $C_6$ hydroxyalkyl carboxymethyl cellulose. In some embodiments, the alkali metal salt of hydroxyalkyl carboxymethyl cellulose includes at least one alkali metal salt of $C_2$ to $C_6$ hydroxyalkyl carboxymethyl cellulose. According to some embodiments of this application, the alkali metal salt of hydroxyalkyl carboxymethyl cellulose includes at least one of an alkali metal salt of hydroxyethyl carboxymethyl cellulose or an alkali metal salt of hydroxypropyl carboxymethyl cellulose. In some embodiments, the alkali metal is lithium, sodium, potassium, rubidium, or cesium. In some embodiments, $C_2$ to $C_6$ hydroxyalkyl group is hydroxyethyl group, hydroxypropyl group, hydroxybutyl group, hydroxypentyl group, or hydroxyhexyl group.

According to some embodiments of this application, the negative electrode additive includes at least one of hydroxypropyl carboxymethyl cellulose, lithium hydroxypropyl carboxymethyl cellulose, sodium hydroxypropyl carboxymethyl cellulose, hydroxyethyl carboxymethyl cellulose, lithium hydroxyethyl carboxymethyl cellulose, or sodium hydroxyethyl carboxymethyl cellulose.

Artificial graphite with low OI value (OI $\leq$ 11) has strong isotropy and the advantages of low swelling in a direction Z and excellent kinetic performance. During charging, lithium ions can quickly intercalate into graphite with low OI value, a certain thickness swelling is released in the directions X and Y, thereby relatively reducing the swelling in the direction Z, which can in turn reduce the cycling swelling rate of the electrochemical device. However, due to the swelling of the electrode plate in the directions X and Y, the electrode plate is prone to film peeling, with high deformation rate, which in turn reduces the cycling capacity retention rate of the electrochemical device. In addition, low OI value graphite is mostly formed by accumulation of secondary particles, and in most cases, low OI value graphite is often accompanied by low tap density. Such graphite with low OI value (OI $\leq$ 11) and low TD (TD $\leq$ 0.9) is not easy to disperse and often requires a large amount of dispersant to guarantee slurry uniformity. In conventional negative electrode plates, sodium carboxymethyl cellulose (CMC) is used as a dispersant. Although CMC can disperse and suspend graphite and bind graphite particles, due to high brittleness of CMC, an adhesion network in an active material layer is easily damaged during cold pressing, leading to limited improvement on the cycling deformation rate of the electrochemical device. In this application, a hydroxyalkyl carboxymethyl cellulose dispersant with excellent flexibility is added to the negative electrode, which can effectively reduce the damage to the adhesion network caused by brittleness of the active material layer when subjected to rolling external force/swelling and contraction, so that the electrode plate still maintains high adhesion force and ionic conductivity after rolling and long cycles, thereby allowing for high volumetric energy density, excellent cycling performance, and low-temperature rate performance of the electrochemical device.

According to some embodiments of this application, for the negative electrode additive, degree of substitution of hydroxyalkyl group is 0.1 to 0.3. In some embodiments, for the negative electrode additive, the degree of substitution of hydroxyalkyl group is 0.13, 0.15, 0.17, 0.19, 0.2, 0.21, 0.23, 0.25, 0.27, or 0.29, or in a range defined by any two of these values. In some embodiments, for the negative electrode additive, the degree of substitution of hydroxyalkyl group is 0.16 to 0.28. As the degree of substitution of hydroxyalkyl group increases, the negative electrode additive has increased flexibility and decreased brittleness. After the electrode plate containing the negative electrode additive is rolled, the damage to the adhesion network under external force is reduced, and the adhesion performance is improved. In addition, the negative electrode additive with high flexibility can also reduce the brittle cracking of adhesion caused by swelling and contraction of graphite during cycling, conducive to improving the cycling capacity retention rate and reducing the cycling deformation rate of the electrochemical device. However, excessively high degree of substitution of hydroxyalkyl group leads to decreased bulk strength of the negative electrode additive, resulting in decreased adhesion force of a corresponding electrode plate.

According to some embodiments of this application, for the negative electrode additive, degree of substitution of hydroxypropyl group is 0.1 to 0.3. In some embodiments, for the negative electrode additive, the degree of substitution of hydroxypropyl group is 0.16 to 0.28. In some embodiments, for the negative electrode additive, degree of substitution of hydroxyethyl group is 0.1 to 0.3. In some embodiments, for the negative electrode additive, the degree of substitution of hydroxyethyl group is 0.16 to 0.28.

In some embodiments, for the negative electrode additive, degree of substitution of carboxymethyl group is 0.5 to 0.9. In some embodiments, for the negative electrode additive, the degree of substitution of carboxymethyl group is 0.55, 0.6, 0.65, 0.7, 0.75, 0.85, or 0.85, or in a range defined by any two of these values.

According to some embodiments of this application, the negative electrode additive includes at least one alkali metal salt of hydroxyalkyl carboxymethyl cellulose; and the negative electrode active material layer includes a region A and a region B, where a ratio of the amount of alkali metal element in the region A to the amount of alkali metal element in the region B is 0.8 to 1.2, the region A is a region from the center in a thickness direction of the negative electrode active material layer to a surface side of the negative electrode active material layer, and the region B is a region from the center in the thickness direction of the negative electrode active material layer to a side of the negative electrode current collector. In some embodiments, the negative electrode additive includes at least one alkali metal salt of $C_2$ to $C_6$ hydroxyalkyl carboxymethyl cellulose, where the ratio of the amount of alkali metal element in the region A to the amount of alkali metal element in the region B is 0.8 to 1.2. In some embodiments, the negative electrode additive includes lithium hydroxypropyl carboxymethyl cellulose, where a ratio of the amount of lithium element in the region A to the amount of lithium element in the region B is 0.8 to 1.2.

According to some embodiments of this application, the negative electrode active material layer further includes a binder. In some embodiments, the binder includes at least one of styrene-butadiene rubber, polyacrylic acid, polyacrylate salt, polyimide, polyamideimide, polyvinylidene fluoride, polyvinylidene difluoride, polytetrafluoroethylene, water-borne acrylic resin, polyvinyl formal, or styrene-acrylic copolymer resin.

According to some embodiments of this application, an adhesion force between the negative electrode active material layer and the negative electrode current collector is 8 N/m to 15 N/m. According to some embodiments of this application, ionic conductivity of the negative electrode is 0.1 S/cm to 0.4 S/cm.

According to some embodiments of this application, the negative electrode current collector negative electrode current collector may be copper foil, nickel foil, stainless steel foil, titanium foil, nickel foam, copper foam, a polymer substrate coated with conductive metal, or a combination thereof.

The electrochemical device of this application further includes a positive electrode, where the positive electrode includes a positive electrode current collector and a positive electrode active material layer, and the positive electrode active material layer includes a positive electrode active material, a binder and a conductive agent.

According to some embodiments of this application, the positive electrode current collector may be a metal foil current collector or a composite current collector. For example, an aluminum foil may be used. The composite current collector may be formed by forming a metal material (copper, copper alloy, nickel, nickel alloy, titanium, titanium alloy, silver, silver alloy, or the like) on a polymer material matrix.

According to some embodiments of this application, the positive electrode active material may include at least one of lithium cobalt oxide, lithium nickel manganese cobalt oxide, lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganate, spinel-type lithium nickel manganate, or lithium titanate. In some embodiments, the binder may include various binder polymers, for example, at least one of polyvinylidene fluoride, polytetrafluoroethylene, polyolefin, sodium carboxymethyl cellulose, lithium carboxymethyl cellulose, modified polyvinylidene fluoride, modified SBR rubber, or polyurethane. In some embodiments, a polyolefin binder includes at least one of polyethylene, polypropylene, polyvinyl ester, polyvinyl alcohol, or polyacrylic acid. In some embodiments, any conductive material causing no chemical change can be used as the conductive agent. Examples of the conductive agent includes: a carbon-based material such as natural graphite, artificial graphite, carbon black, acetylene black, Ketjen black, or carbon fiber; a metal-based material such as metal powder or metal fiber including copper, nickel, aluminum, or silver; a conductive polymer such as a polyphenylene derivative; or a mixture thereof.

The electrochemical device of this application further includes a separator, and the separator used in the electrochemical device according to this application is not particularly limited to any material or shape, and may be based on any technology disclosed in the prior art. In some embodiments, the separator includes a polymer or an inorganic substance formed by a material stable to an electrolyte of this application.

For example, the separator may include a substrate layer and a surface treatment layer. The substrate layer is non-woven fabric, a membrane, or a composite membrane having a porous structure, and a material of the substrate layer is at least one selected from polyethylene, polypropylene, polyethylene terephthalate, or polyimide. Specifically, a polypropylene porous membrane, a polyethylene porous membrane, polypropylene non-woven fabric, polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic substance layer, or may be a layer formed by a mixed polymer and an inorganic substance.

The inorganic substance layer includes inorganic particles and a binder. The inorganic particles are at least one selected from aluminum oxide, silicon oxide, magnesium oxide, titanium oxide, hafnium dioxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene.

The polymer layer includes a polymer, and a material of the polymer is selected from at least one of polyamide, polyacrylonitrile, an acrylate polymer, polyacrylic acid, polyacrylate salt, polyvinylpyrrolidone, polyvinyl ether, polyvinylidene fluoride, or poly(vinylidene fluoride-hexafluoropropylene).

For example, the electrochemical device of this application further includes an electrolyte. The electrolyte that can be used in this application may be an electrolyte known in the prior art.

In some embodiments, the electrolyte includes an organic solvent, a lithium salt, and a selectable additive. The organic solvent of the electrolyte according to this application may be any organic solvent known in the prior art which can be used as a solvent of the electrolyte. An electrolytic salt used in the electrolyte according to this application is not limited, and may be any electrolytic salt known in the prior art. The additive of the electrolyte according to this application may be any additive known in the prior art which can be used as an additive of the electrolyte. In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, at least one of 1,3-dioxolane (DOL) or dimethoxyethane (DME). In some embodiments, the lithium salt includes at least one of an organic lithium salt or an inorganic lithium salt. In some embodiments, the lithium salt includes but is not limited to lithium hexafluorophosphate ($LiPF_6$), lithium tetrafluoroborate

(LiBF$_4$), lithium difluorophosphate (LiPO$_2$F$_2$), lithium bistrifluoromethanesulfonimide LiN(CF$_3$SO$_2$)$_2$ (LiTFSI), lithium bis(fluorosulfonyl)imide Li(N(SO$_2$F)$_2$) (LiFSI), lithium bis(oxalate) borate LiB(C$_2$O$_4$)$_2$ (LiBOB), or lithium difluoro(oxalato)borate LiBF$_2$(C$_2$O$_4$) (LiDFOB).

In some embodiments, the electrochemical device of this application includes but is not limited to all types of primary batteries, secondary batteries, or capacitors. In some embodiments, the electrochemical device is a lithium secondary battery. In some embodiments, the lithium secondary battery includes but is not limited to a lithium metal secondary battery, a lithium-ion secondary battery, a lithium polymer secondary battery, or a lithium-ion polymer secondary battery.

II. Electronic device

This application further provides an electronic device including the electrochemical device according to the first aspect of this application.

The electronic apparatus or device in this application is not particularly limited. In some embodiments, the electronic apparatus of this application includes but is not limited to a notebook computer, a pen-input computer, a mobile computer, an electronic book player, a portable telephone, a portable fax machine, a portable copier, a portable printer, a stereo headset, a video recorder, a liquid crystal display television, a portable cleaner, a portable CD player, a mini-disc player, a transceiver, an electronic notebook, a calculator, a storage card, a portable recorder, a radio, a backup power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

In the following examples and comparative examples, all reagents, materials, and instruments used are commercially available unless otherwise specified.

**Examples and comparative examples**

Preparation of a negative electrode: artificial graphite (OI value, tap density were shown in Table 1), an additive (a specific type was shown in Table 1), and an aqueous binder styrene-acrylic copolymer resin (styrene-acrylic resin) were mixed with deionized water at a mass ratio of (96 to 98.5):(0.5 to 2.5):(0 to 2.0) and stirred to uniformity to obtain a negative electrode slurry. The negative electrode slurry was applied onto a copper foil of 6 μm, followed by drying, cold pressing, cutting, and tab welding, to obtain a negative electrode.

Preparation of a positive electrode: lithium cobalt oxide, conductive carbon, and polyvinylidene fluoride were mixed at a mass ratio of 96:2:2, with a solvent N-methyl-2-pyrrolidone (NMP) added to produce a slurry. The slurry was applied onto an aluminum foil, followed by drying, cold pressing, cutting, and tab welding, to obtain a positive electrode.

Preparation of a lithium-ion battery: the positive electrode, a separator (PE porous polymer film), and the negative electrode were stacked in sequence, with the separator sandwiched between the positive electrode and the negative electrode for separation. Then, the resulting stack was wound to form a jelly roll. The jelly roll was placed in an outer packaging foil, and an electrolyte (a solvent of EC and DMC at a volume ratio of 1:1, 1 M/L LiPF$_6$ solution) was injected into the dried cell. After processes such as vacuum packaging, standing, formation, and shaping, the preparation of a lithium-ion battery was completed.

**Test methods**

**1. Tap density**

Tap density is a mass per unit volume of powder measured after tapping under specified conditions in a container, measured in g/cm$^3$. A test method was as follows: A graduated cylinder containing a specific mass of powder was fixed on a mechanical vibration device. The vibration motor drove the mechanical vibration device to vibrate vertically up and down. The graduated cylinder containing powder vibrated rhythmically with the mechanical vibration device. As the number of vibrations increased, the powder in the graduated cylinder was gradually tapped. After the number of vibrations reached a set number, the mechanical vibration device stopped vibrating, and the volume in the graduated cylinder was read. According to the definition of density: mass divided by volume, density of the powder after tapping was obtained. Specific process parameters: number of vibrations: 5000 times; vibration frequency: 250±15 times/min; and ambient temperature: 15°C to 28°C.

**2. Degree of substitution of additive**

Degree of substitution of carboxymethyl group: The testing standard for the degree of substitution of carboxymethyl group was in accordance with the method in GBIT 1904-2005 food additive sodium carboxymethyl cellulose.

Degree of substitution of hydroxyethyl group or degree of substitution of hydroxypropyl group: tested in accordance with D2363-72, 1976 Annual Book of ASTM Standards.

### 3. Thermogravimetric analysis for negative electrode active material layer

Powder was scraped from the electrode plate and placed in a thermogravimetric analyzer, with the temperature range set to 20°C to 600°C, a temperature rise velocity of 5°C/min, and a gas atmosphere of nitrogen.

A weight loss rate for the obtained thermogravimetric curve at the temperature between 20°C to 600°C was $W_T$%. A weight loss rate between 200°C to 360°C was a%. A weight loss rate between 360°C to 450°C was b%.

### 4. Adhesion force

Test for the adhesion force between the negative electrode active material layer and the negative electrode current collector: the instrument used had the brand of Instron and model 33652. Specifically, the negative electrode (width 30 mm × length (100 mm to 160 mm)) was fixed on a steel plate with double-sided adhesive paper (model: 3M9448A, width 20 mm × length (90 mm to 150 mm)). A paper tape with the same width as the negative electrode was fixed to another side of the negative electrode with adhesive paper. A limit block of a tensile machine was adjusted to a suitable position, the paper tape was folded upward and slid 40 mm, with a sliding speed of 50 mm/min, and the adhesion force between the negative electrode active material layer and the negative electrode current collector was tested at 180° (that is, stretching in a reverse direction).

### 5. Ionic conductivity

First, the packaging bag, the electrode plate, and the separator were left standing at 60°C for 4 h before use. Then, the electrode plate was cut into small pieces larger than size of a knife die (size of the knife die was 23 mm × 35 mm × 2 mm) with ceramic scissors, and the small pieces were placed on the knife die for punching. The punched electrode plate was taken out with tweezers for later use. Then, the electrode plate was made into a single-layer symmetrical cell. The symmetrical cell was placed in an electrochemical workstation for EIS test, with the frequency set to 0.5 Hz to 200 kHz and the perturbation voltage of 10 mV; and the ionic resistance Rion of the electrode plate was calculated from the intersection of two straight lines of EIS. The ionic conductivity of the electrode plate was calculated by using the following formula:

ionic conductivity of the electrode plate = d / (Rion × A), where d was thickness of the electrode plate, and A was area of the electrode plate.

### 6. Capacity retention rate after cycling

At 45°C, the lithium-ion battery was constant-current charged at 1C to 4.45 V, then constant-voltage charged to a current of 0.05C, and then constant-current discharged at 1C to a 3.0 V. This was the first cycle. The lithium-ion battery experienced multiple such cycles under the foregoing conditions. The capacity retention rate after cycling of the lithium-ion battery was calculated by using the following formula:

capacity retention rate after cycling = (discharge capacity after corresponding number of cycles/discharge capacity of the first cycle) × 100%.

### 7. Discharge percentage

At 25°C, the battery was constant-current charged at 0.5C to 4.45 V, then constant-voltage charged to 0.05C, and then constant-current discharged at 0.5C to 3.0 V. The capacity was recorded as discharge capacity at 25°C. At 25°C, the battery was constant-current charged at 0.5C to 4.45 V, then constant-voltage charged to 0.05C, placed in a -20°C thermostat and left standing for 2 h, and then constant-current discharged at 0.5C to 3.0 V. The capacity was recorded as discharge capacity at -20°C. The discharge percentage of the lithium-ion battery was calculated by using the following formula:

discharge percentage = (discharge capacity at -20°C/discharge capacity at 25°C) × 100%.

### 8. Cycling thickness swelling rate

The lithium-ion battery was placed between two flat plates, and the distance between the two flat plates was measured as the thickness of the lithium-ion battery when the upper plate was pressed down with a pressure of 700 g.

At 45°C, the lithium-ion battery was constant-current charged at 1C to 4.45 V, then constant-voltage charged to a current of 0.05C, and the thickness of the lithium-ion battery was measured, which was the first full-charge thickness of the lithium-ion battery. Then, multiple cycles were performed according to the cycling process, and the thickness of the lithium-ion battery was measured. The cycling thickness swelling rate of the lithium-ion battery was calculated by using the following formula:

cycling thickness swelling rate = (thickness of the lithium-ion battery after corresponding number of cycles/thickness of the lithium-ion battery after the first cycle - 1) × 100%.

## 9. Cycling deformation rate

Thickness test for the lithium-ion battery: The lithium-ion battery was placed between two flat plates, and the distance between the two flat plates was measured as the thickness of the lithium-ion battery when the upper plate was pressed down with a pressure of 700 g.

Micrometer thickness test for the lithium-ion battery: Three approximately equally divided points were selected on a surface of the battery body on an Al tab side (positive electrode tab), and the thicknesses at the three points were measured with a micrometer, and the average thickness was taken as the micrometer thickness of the lithium-ion battery. The cycling deformation rate of the lithium-ion battery was calculated by using the following formula:

cycling deformation rate = (thickness of the battery cell after corresponding number of cycles/micrometer thickness of the battery cell after corresponding number of cycles - 1) × 100%.

## 10. Flexibility level

The testing standard for the flexibility level was in accordance with GBIT 1731-93 test method for flexibility of paint film. The test was performed using a shaft rod 7, and the flexibility level was determined according to the degree of cracking on an inner side of a bent electrode plate. When the crack width on the inner side of the bent electrode plate was less than 10 μm, the flexibility level was determined to be excellent. When the crack width on the inner side of the bent electrode plate satisfied 10 μm ≤ crack width ≤ 150 μm, the flexibility level was determined to be intermediate. When the crack width on the inner side of the bent electrode plate was greater than 150 μm, the flexibility level was determined to be poor.

**Test results**

**Table 1-1**

| Example and comparative example | Negative electrode active material layer | | | | | | | | |
|---|---|---|---|---|---|---|---|---|---|
| | Artificial graphite | | Additive | | Value of thermal weight loss rate in range of 25°C to 600°C $W_T$ | Value of thermal weight loss rate in range of 200°C to 360°C a | Value of thermal weight loss rate in range of 360°C to 450°C b | a+b | Relational expression 1 |
| | OI value | TD | Degree of substitution of carboxymethy 1 group | Degree of substitution of hydroxypropy 1 group | | | | | |
| 1-1 | 10 | 0.8 | 0.85 | 0.2 | 1.9 | 1.6 | 0.3 | 1.9 | 1.55 |
| 1-2 | 6.1 | 0.8 | 0.85 | 0.2 | 1.9 | 1.6 | 0.3 | 1.9 | 1.55 |
| 1-3 | 7 | 0.8 | 0.85 | 0.2 | 1.9 | 1.6 | 0.3 | 1.9 | 1.55 |
| 1-4 | 8 | 0.8 | 0.85 | 0.2 | 1.9 | 1.9 | 0 | 1.9 | 1.55 |
| 1-5 | 8 | 0.8 | 0.85 | 0.2 | 1.9 | 1.6 | 0.3 | 1.9 | 1.55 |
| 1-6 | 9 | 0.8 | 0.85 | 0.2 | 1.9 | 1.6 | 0.3 | 1.9 | 1.55 |
| 1-7 | 10.9 | 0.8 | 0.85 | 0.2 | 1.9 | 1.6 | 0.3 | 1.9 | 1.55 |
| 1-8 | 8 | 0.6 | 0.85 | 0.2 | 2.0 | 1.9 | 0.1 | 2 | 1.82 |

(continued)

| Example and comparative example | Negative electrode active material layer | | | | | | | | |
|---|---|---|---|---|---|---|---|---|---|
| | Artificial graphite | | Additive | | Value of thermal weight loss rate in range of 25°C to 600°C $W_T$ | Value of thermal weight loss rate in range of 200°C to 360°C a | Value of thermal weight loss rate in range of 360°C to 450°C b | a+b | Relational expression 1 |
| | OI value | TD | Degree of substitution of carboxymethy 1 group | Degree of substitution of hydroxypropy 1 group | | | | | |
| 1-9 | 8 | 0.9 | 0.85 | 0.2 | 1.9 | 1.6 | 0.3 | 1.9 | 1.42 |
| 1-10 | 8 | 0.7 | 0.85 | 0.2 | 1.9 | 1.7 | 0.2 | 1.9 | 1.69 |
| 1-11 | 8 | 0.8 | 0.85 | 0.2 | 2.2 | 1.9 | 0.3 | 2.2 | 1.55 |
| 1-12 | 8 | 0.8 | 0.85 | 0.2 | 2.5 | 2.2 | 0.3 | 2.5 | 1.55 |
| 1-13 | 8 | 0.8 | 0.85 | 0.2 | 1.7 | 1.6 | 0.1 | 1.7 | 1.55 |
| Comparative example 1 | 8 | 0.8 | 0.9 | 0 | 1.9 | 1.6 | 0.3 | 1.9 | 1.55 |

| Example and comparative example | Negative electrode active material layer | | | | | | | | |
|---|---|---|---|---|---|---|---|---|---|
| | Artificial graphite | | Additive | | Value of thermal weight loss rate in range of 25°C to 600°C $W_T$ | Value of thermal weight loss rate in range of 200°C to 360°C a | Value of thermal weight loss rate in range of 360°C to 450°C b | a+b | Relational expression 1 |
| | OI value | TD | Degree of substitution of carboxymethy 1 group | Degree of substitution of hydroxypropy 1 group | | | | | |
| Comparative example 2 | 8 | 0.8 | 0.9 | 0 | 3.6 | 1.6 | 2 | 3.6 | 1.55 |
| Comparative example 3 | 13 | 1.1 | 0.85 | 0.2 | 1.9 | 1.6 | 0.3 | 1.9 | 1.14 |

Note: In examples 1-1 to 1-13 and comparative example 3, the additives were all lithium hydroxypropyl carboxymethyl cellulose; in comparative examples 1 and 2, the additives were all lithium carboxymethyl cellulose; and relational expression 1 was (-0.0135 × TD + 0.0263) × 100.

**Table 1-2**

| Example and comparative example | Negative electrode plate | | | Lithium-ion battery | | | |
|---|---|---|---|---|---|---|---|
| | Adhesion force (N/m) | Flexibility level | Ionic conductivity (S/cm) | Capacity retention rate after 800 cycles (%) | Thickness swelling rate after 800 cycles (%) | Deformation rate after 800 cycles (%) | Discharge percentage (%) |
| 1-1 | 13 | Excellent | 0.22 | 82.5 | 6.8 | 1 | 50.7 |
| 1-2 | 10 | Excellent | 0.29 | 80 | 5.7 | 1.5 | 56.6 |
| 1-3 | 11 | Excellent | 0.27 | 80.6 | 6.1 | 1.5 | 55.3 |
| 1-4 | 12 | Excellent | 0.24 | 74.3 | 17.5 | 4 | 54.3 |

(continued)

| Example and comparative example | Negative electrode plate | | | Lithium-ion battery | | | |
|---|---|---|---|---|---|---|---|
| | Adhesion force (N/m) | Flexibility level | Ionic conductivity (S/cm) | Capacity retention rate after 800 cycles (%) | Thickness swelling rate after 800 cycles (%) | Deformation rate after 800 cycles (%) | Discharge percentage (%) |
| 1-5 | 12 | Excellent | 0.25 | 80.9 | 6.1 | 1 | 54.6 |
| 1-6 | 12 | Excellent | 0.23 | 81.2 | 6.2 | 1 | 52.3 |
| 1-7 | 13 | Excellent | 0.21 | 81.3 | 7.5 | 1 | 49.2 |
| 1-8 | 12 | Excellent | 0.22 | 81.1 | 6 | 1 | 52.1 |
| 1-9 | 14 | Excellent | 0.24 | 82.2 | 6.7 | 1 | 54.3 |
| 1-10 | 13 | Excellent | 0.24 | 82.2 | 6.2 | 1 | 54.6 |
| 1-11 | 15 | Excellent | 0.18 | 81.2 | 6.1 | 1 | 40.1 |
| 1-12 | 17 | Excellent | 0.17 | 81.3 | 6.1 | 1 | 39.5 |
| 1-13 | 9 | Excellent | 0.27 | 80.8 | 6.7 | 1.5 | 55.8 |
| Comparative example 1 | 5 | Poor | 0.2 | 60.5 | 23.5 | 6 | 40.5 |
| Comparative example 2 | 13 | Excellent | 0.13 | 82.2 | 6 | 1 | 38.6 |
| Comparative example 3 | 14 | Excellent | 0.14 | 80.1 | 12 | 1 | 45.2 |

In Table 1, the effect of the OI value of artificial graphite as the negative electrode active material on performance have been studied in examples 1-1 to 1-7. When the OI value of artificial graphite is 8-9, the negative electrode plate and the lithium-ion battery exhibit optimal comprehensive performance.

In Table 1, the effect of the thermal weight loss rate $W_T$% of the negative electrode active material layer at 600°C on performance have been studied in examples 1-11 to 1-13. As $W_T$ increases, the cycling deformation rate of the lithium-ion battery decreases, but the ionic conductivity of the electrode plate decreases, resulting in decreased discharge rate performance of the lithium-ion battery.

In Table 1, lithium carboxymethyl cellulose was used as an additive in comparative example 1. Due to high brittleness, lithium carboxymethyl cellulose is prone to cracking after rolling, resulting in low adhesion force of the electrode plate, and therefore during cycling, the swelling of graphite in the directions X and Y cannot be suppressed, leading to a cycling deformation rate as high as 6%, and a cycling capacity retention rate of only about 60%. In comparative example 2, the amount of the binder in the electrode plate was increased on the basis of comparative example 1 (the magnitude of b is related to the amount of the binder in the negative electrode active material layer, and larger b value indicates higher amount of the binder in the negative electrode active material layer), thereby improving the adhesion force of the electrode plate. Although the improvement of the adhesion force of the electrode plate can inhibit the swelling of graphite in the directions X and Y, thereby reducing the cycling deformation rate and improving the cycling capacity retention rate of the lithium-ion battery. However, due to coating of the binder on the surface of graphite, excessively high amount of the binder hinders the transmission of lithium ions, resulting in decreased ionic conductivity of the electrode plate, and leading to reduced discharge rate of the lithium-ion battery. In comparative example 3 where graphite with conventional OI value was used, the deformation rate of the lithium-ion battery was reduced, and the cycling capacity retention rate was good. However, as compared with example 1-1, the cycling swelling rate was larger, the ionic conductivity was lower, and the discharge percentage was reduced, exhibiting no performance advantage brought by graphite with low OI value in example 1-1.

**Table 2-1**

| Example | Negative electrode active material layer | | | | | | | |
| | Additive | | | Value of thermal weight loss rate in range of 25°C to 600°C $W_T$ | Value of thermal weight loss rate in range of 200°C to 360°C a | Value of thermal weight loss rate in range of 360°C to 450°C b | a+b | Relational expression 1 |
| | Degree of substitution of carboxymethyl group | Degree of substitution of hydroxypropyl group | Type | | | | | |
| 1-5 | 0.85 | 0.2 | Lithium hydroxypropyl carboxymethyl cellulose | 1.9 | 1.6 | 0.3 | 1.9 | 1.55 |
| 2-1 | | 0.1 | | | | | | |
| 2-2 | | 0.16 | | | | | | |
| 2-3 | | 0.22 | | | | | | |
| 2-4 | | 0.28 | | | | | | |
| 2-5 | | 0.3 | | | | | | |
| 2-6 | 0.85 | 0.2 | Lithium hydroxypropyl carboxymethyl cellulose | 1.9 | 1.9 | 0 | 1.9 | 1.55 |
| 2-7 | | | | 1.9 | 1.7 | 0.2 | 1.9 | |
| 2-8 | | | | 2.1 | 1.6 | 0.5 | 2.1 | |
| 2-9 | | | | 2.0 | 1.6 | 0.4 | 2.0 | |
| 2-10 | | | | 1.9 | 1.4 | 0.5 | 1.9 | |
| 2-11 | | | | 1.9 | 1.3 | 0.6 | 1.9 | |

| Example | Negative electrode active material layer | | | | | | | |
| | Additive | | | Value of thermal weight loss rate in range of 25°C to 600°C $W_T$ | Value of thermal weight loss rate in range of 200°C to 360°C a | Value of thermal weight loss rate in range of 360°C to 450°C b | a+b | Relational expression 1 |
| | Degree of substitution of carboxymethyl group | Degree of substitution of hydroxypropyl group | Type | | | | | |
| 2-12 | 0.85 | 0.2 | Sodium hydroxypropyl carboxymethyl cellulose | 1.9 | 1.6 | 0.3 | 1.9 | 1.55 |
| 2-13 | | | | 2.5 | 2.2 | 0.3 | 2.5 | |
| 2-14 | 0.85 | 0.2 (hydroxyethyl group) | Lithium hydroxyethyl carboxymethyl cellulose | 1.9 | 1.6 | 0.3 | 1.9 | 1.55 |
| 2-15 | | | Sodium hydroxyethyl carboxymethyl cellulose | | | | | |

(continued)

| Example | Degree of substitution of carboxymethyl group | Degree of substitution of hydroxypropyl group | Type | Value of thermal weight loss rate in range of 25°C to 600°C $W_T$ | Value of thermal weight loss rate in range of 200°C to 360°C a | Value of thermal weight loss rate in range of 360°C to 450°C b | a+b | Relational expression 1 |
|---|---|---|---|---|---|---|---|---|
| | | | **Negative electrode active material layer** | | | | | |
| | | **Additive** | | | | | | |
| 2-16 | 0.5 | | Lithium hydro-xypropyl car-boxymethyl cellulose | | | | | |
| 2-17 | 0.75 | 0.2 | | 1.9 | 1.6 | 0.3 | 1.9 | 1.55 |
| 2-18 | 0.9 | | | | | | | |
| 2-19 | 0.5 | | Lithium sodium hydroxypropyl carboxymethyl cellulose | | | | | |
| 2-20 | 0.75 | 0.2 | | 1.9 | 1.6 | 0.3 | 1.9 | 1.55 |
| 2-21 | 0.9 | | | | | | | |

Note: In examples 2-1 to 2-21, the OI value of the artificial graphite as the negative electrode active material was 8, and the TD was 0.8; and relational expression 1 was (-0.0135 × TD + 0.0263) × 100.

**Table 2-2**

| Example | Negative electrode plate | | | Lithium-ion battery | | | |
|---|---|---|---|---|---|---|---|
| | Adhesion force (N/m) | Flexibility level | Ionic conductivity (S/cm) | Capacity retention rate after 800 cycles (%) | Thickness swelling rate after 800 cycles (%) | Deformation rate after 800 cycles (%) | Discharge percentage (%) |
| 1-5 | 12 | Excellent | 0.25 | 80.9 | 6.1 | 1 | 54.6 |
| 2-1 | 10 | Intermediate | 0.18 | 70.4 | 20.4 | 5 | 40.6 |
| 2-2 | 12 | Excellent | 0.2 | 80.8 | 10.6 | 2 | 51.6 |
| 2-3 | 14 | Excellent | 0.23 | 82.2 | 6.2 | 1 | 55.3 |
| 2-4 | 11 | Excellent | 0.25 | 80.1 | 7.1 | 1 | 55.9 |
| 2-5 | 9 | Excellent | 0.22 | 69.1 | 14.6 | 3 | 50.3 |
| 2-6 | 10 | Excellent | 0.24 | 74.3 | 17.5 | 4 | 54.3 |
| 2-7 | 11 | Excellent | 0.23 | 80.3 | 7.2 | 1 | 54.1 |
| 2-8 | 14 | Excellent | 0.21 | 81.3 | 6.5 | 1 | 54.1 |
| 2-9 | 13 | Excellent | 0.22 | 82.5 | 6.7 | 1 | 53.7 |
| 2-10 | 12 | Excellent | 0.21 | 74.3 | 12.5 | 3 | 53.2 |
| 2-11 | 12 | Excellent | 0.2 | 70.1 | 15.4 | 3 | 52.5 |
| 2-12 | 14 | Excellent | 0.19 | 82 | 6.3 | 1 | 52.1 |
| 2-13 | 17 | Excellent | 0.16 | 82 | 6.1 | 1 | 39.3 |
| 2-14 | 13 | Excellent | 0.22 | 81 | 7 | 1 | 54.1 |
| 2-15 | 13 | Excellent | 0.18 | 80.5 | 7.2 | 1 | 51.2 |
| 2-16 | 13 | Excellent | 0.21 | 81.8 | 6.3 | 1 | 54 |

(continued)

| | Negative electrode plate | | | Lithium-ion battery | | | |
|---|---|---|---|---|---|---|---|
| Example | Adhesion force (N/m) | Flexibility level | Ionic conductivity (S/cm) | Capacity retention rate after 800 cycles (%) | Thickness swelling rate after 800 cycles (%) | Deformation rate after 800 cycles (%) | Discharge percentage (%) |
| 2-17 | 13 | Excellent | 0.22 | 82 | 6.2 | 1 | 54.1 |
| 2-18 | 13 | Excellent | 0.22 | 82 | 6.3 | 1 | 54 |
| 2-19 | 13 | Excellent | 0.19 | 81.5 | 6.3 | 1 | 52 |
| 2-20 | 13 | Excellent | 0.19 | 81.6 | 6.2 | 1 | 52.1 |
| 2-21 | 13 | Excellent | 0.19 | 81.9 | 6.3 | 1 | 52.2 |

In Table 2, the effect of the degree of substitution of hydroxypropyl group in the additive lithium hydroxypropyl carboxymethyl cellulose on performance have been studied in examples 2-1 to 2-5. When the degree of substitution of hydroxypropyl group falls in the range of 0.16 to 0.28, both the negative electrode plate and the lithium-ion battery exhibit excellent performance. The adhesion force of the negative electrode plate (that is, the adhesion force between the negative electrode active material layer and the negative electrode current collector) is greater than 8 N/m, and the ionic conductivity of the negative electrode plate is greater than 0.2 S/cm. For the lithium-ion battery, the cycling capacity retention rate of is greater than 80%, the deformation rate is less than 2%, and the discharge rate is greater than 50%. Example 2-3 with the degree of substitution of hydroxypropyl group of 0.22 exhibits optimal effect, with the adhesion force of 14 N/m, the ionic conductivity of the electrode plate of 0.23 S/cm, and the cycling capacity retention rate of the lithium-ion battery of 82.2%. It can also be seen from the data in examples 2-1 to 2-5 that as the degree of substitution of hydroxypropyl group in lithium hydroxypropyl carboxymethyl cellulose increases, the adhesion force of the electrode plate first increases and then decreases. This is because as the degree of substitution of hydroxypropyl group increases, lithium hydroxypropyl carboxymethyl cellulose has increased flexibility and decreased brittleness, reducing the damage to the adhesion network under external force after rolling of the electrode plate, thereby improving the adhesion performance. In addition, the brittle cracking of adhesion caused by swelling and contraction of graphite during cycling can also be reduced. However, with further increase in the degree of substitution of hydroxypropyl group, the bulk strength of lithium hydroxypropyl carboxymethyl cellulose decreases, leading to decreased adhesion force of the corresponding electrode plate.

In Table 2, the effect of the thermal weight loss rate a% in the range of 200°C to 360°C and thermal weight loss rate b% in the range of 360°C to 450°C of the negative electrode active material layer on performance have been studied in examples 2-6 to 2-11. The magnitude of a is related to the amount of lithium hydroxypropyl carboxymethyl cellulose in the negative electrode active material layer. Larger a value indicates higher amount of lithium hydroxypropyl carboxymethyl cellulose in the negative electrode active material layer. The magnitude of b is related to the amount of the binder in the negative electrode active material layer. Larger b value indicates higher amount of the binder in the negative electrode active material layer. In examples 2-10 and 2-11, when a is less than 1.5, correspondingly, a is less than $(-0.0135 \times TD + 0.0263) \times 100$. At this time, for the lithium-ion battery, the cycling deformation rate is greater than 3%, and the capacity retention rate is less than 80%. This is because artificial graphite with low tap density (tap density less than 0.9 g/cm$^3$) is not easy to disperse. Excessively low amount of lithium hydroxypropyl carboxymethyl cellulose leads to poor slurry uniformity and uneven dispersion of the additive and binder in the negative electrode active material layer, making it impossible to create a uniform and effective adhesion network, thereby failing to suppress the swelling and slippage dislocation of graphite. In examples 2-7 to 2-10, when a is greater than 1.5, correspondingly, a is greater than $(-0.0135 \times TD + 0.0263) \times 100$. The slurry uniformity is good, and a uniformly dispersed adhesion network can be created in the negative electrode active material layer, thereby allowing the lithium-ion battery to have a cycling capacity retention rate greater than 80% and a deformation rate less than 2%. In example 2-6, b is 0, meaning that the amount of the binder in the negative electrode active material layer is 0, making the negative electrode plate have poor adhesion network and deformation and increase in the directions X and Y due to adhesion failure, thereby leading to slightly large swelling deformation rate and thickness swelling rate of the lithium-ion battery. Therefore, when a and b satisfy $a + b < 2$ and $a \geq (-0.0135 \times TD + 0.0263) \times 100$, both the negative electrode plate and the lithium-ion battery exhibit excellent performance.

Although illustrative embodiments have been demonstrated and described, persons skilled in the art should understand that the foregoing embodiments are not to be construed as limiting this application, and that these embodiments may be changed, replaced, and modified without departing from the spirit, principle, and scope of this application.

**Claims**

1. An electrochemical device, comprising a negative electrode, wherein the negative electrode comprises a negative electrode current collector and a negative electrode active material layer, the negative electrode active material layer comprises a negative electrode active material and a negative electrode additive, and the negative electrode active material contains graphite; wherein
an orientation index OI of the negative electrode active material is less than or equal to 11; in a thermogravimetric analysis of the negative electrode active material layer, a weight loss rate of the negative electrode active material layer in a temperature range of 25°C to 600°C is $W_T$%, satisfying $1 \leq W_T \leq 2.5$.

2. The electrochemical device according to claim 1, wherein tap density TD of the negative electrode active material is less than or equal to 0.9 g/cm$^3$.

3. The electrochemical device according to claim 1 or 2, wherein in the thermogravimetric analysis of the negative electrode active material layer, the weight loss rate of the negative electrode active material layer in a temperature range of 200°C to 360°C is a%, and the weight loss rate of the negative electrode active material layer in a temperature range of 360°C to 450°C is b%, satisfying at least one of the following conditions:

    (I)

$$a + b < 2.5;$$

    (II)

$$a \geq 1.5b;$$

    or
    (III)

$$a \geq (-0.0135 \times TD + 0.0263) \times 100.$$

4. The electrochemical device according to claim 3, wherein the negative electrode active material layer satisfies at least one of condition (a) or (b):

    (a)

$$0.8 \leq a \leq 2.2, \text{ and } 0.1 \leq b \leq 0.7;$$

    or
    (b)

$$0.6 \leq TD \leq 0.9.$$

5. The electrochemical device according to claim 3, wherein $1.1 \leq a \leq 1.9$, and $0.2 \leq b \leq 0.5$.

6. The electrochemical device according to claim 1, wherein in a Fourier transform infrared spectroscopy test, the negative electrode active material layer contains a substance having an absorption peak in a range of 1540 cm$^{-1}$ to 1630 cm$^{-1}$ in a spectrogram.

7. The electrochemical device according to claim 1, wherein the negative electrode additive comprises at least one of hydroxyalkyl carboxymethyl cellulose or an alkali metal salt of hydroxyalkyl carboxymethyl cellulose.

8. The electrochemical device according to claim 1, wherein the negative electrode additive comprises at least one of hydroxypropyl carboxymethyl cellulose, lithium hydroxypropyl carboxymethyl cellulose, sodium hydroxypropyl carboxymethyl cellulose, hydroxyethyl carboxymethyl cellulose, lithium hydroxyethyl carboxymethyl cellulose, or sodium hydroxyethyl carboxymethyl cellulose.

9. The electrochemical device according to claim 7, wherein in the negative electrode additive, a degree of substitution of hydroxyalkyl group is 0.1 to 0.3, and a degree of substitution of carboxymethyl group is 0.5 to 0.9.

10. The electrochemical device according to claim 7, wherein in the negative electrode additive, the degree of substitution of hydroxyalkyl group is 0.16 to 0.28.

11. The electrochemical device according to claim 1, wherein the negative electrode additive comprises at least one alkali metal salt of hydroxyalkyl carboxymethyl cellulose; and

the negative electrode active material layer comprises a region A and a region B, wherein a ratio of an amount of alkali metal element in the region A to the amount of alkali metal element in the region B is 0.8 to 1.2, and along a thickness direction of the negative electrode active material layer, the region A is a region of the negative electrode active material layer from a center of the negative electrode active material layer to a surface of a side of the negative electrode active material layer facing away from the negative electrode current collector, and the region B is a region of the negative electrode active material layer from the center of the negative electrode active material layer to a surface of a side of the negative electrode active material layer facing towards the negative electrode current collector.

12. The electrochemical device according to claim 11, wherein the additive comprises lithium hydroxypropyl carboxymethyl cellulose; and a ratio of an amount of lithium element in the region A to the amount of lithium element in the region B is 0.8 to 1.2.

13. The electrochemical device according to claim 1, wherein the negative electrode active material layer further comprises a binder; and the binder comprises at least one of styrene-butadiene rubber, polyacrylic acid, polyacrylate salt, polyimide, polyamideimide, polyvinylidene fluoride, polyvinylidene difluoride, polytetrafluoroethylene, waterborne acrylic resin, polyvinyl formal, or styrene-acrylic copolymer resin.

14. The electrochemical device according to claim 1, wherein the electrochemical device satisfies at least one of condition (i) or (ii):

(i) an adhesion force between the negative electrode active material layer and the negative electrode current collector is 8 N/m to 15 N/m; or
(ii) an ionic conductivity of the negative electrode is 0.1 S/cm to 0.4 S/cm.

15. An electronic device, comprising the electrochemical device according to any one of claims 1 to 14.

FIG. 1

FIG. 2

## INTERNATIONAL SEARCH REPORT

| | International application No. |
|---|---|
| | **PCT/CN2022/079190** |

**A. CLASSIFICATION OF SUBJECT MATTER**

H01M 4/133(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电池, 锂, 取向指数, 热失重, 热重, 石墨, 羧甲基, 羟丙基, 纤维素, battery, graphite, lithium, thermogravimetric, TG, orientation, index, OI, cellulose

**C. DOCUMENTS CONSIDERED TO BE RELEVANT**

| Category* | Citation of document, with indication, where appropriate, of the relevant passages | Relevant to claim No. |
|---|---|---|
| Y | CN 112219293 A (LG CHEMICAL LTD.) 12 January 2021 (2021-01-12) description, paragraphs [0028]-[0099] | 1, 2, 6-10, 13-15 |
| Y | CN 106663808 A (MITSUBISHI CHEM CORP.) 10 May 2017 (2017-05-10) description, paragraphs [0068]-[0120], and table 1H | 1, 2, 6-10, 13-15 |
| Y | CN 111029528 A (CHONGQING LIHONG FINE CHEMICALS CO., LTD.) 17 April 2020 (2020-04-17) description, paragraphs [0003]-[0016] | 6-10 |
| A | JP 2001229914 A (TOYO TANSO CO., LTD. et al.) 24 August 2001 (2001-08-24) entire document | 1-15 |
| A | US 2002015888 A1 (OMARU, A. et al.) 07 February 2002 (2002-02-07) entire document | 1-15 |
| A | CN 114068864 A (NINGDE AMPEREX TECHNOLOGY LTD.) 18 February 2022 (2022-02-18) entire document | 1-15 |

☐ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 September 2022** | **29 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/079190**

| Patent document cited in search report | | | Publication date (day/month/year) | Patent family member(s) | | | Publication date (day/month/year) |
|---|---|---|---|---|---|---|---|
| CN | 112219293 | A | 12 January 2021 | EP | 3793004 | A1 | 17 March 2021 |
| | | | | WO | 2020036392 | A1 | 20 February 2020 |
| | | | | US | 2021167398 | A1 | 03 June 2021 |
| | | | | KR | 20200019005 | A | 21 February 2020 |
| | | | | EP | 3973004 | A4 | 23 June 2021 |
| CN | 106663808 | A | 10 May 2017 | KR | 20170030580 | A | 17 March 2017 |
| | | | | EP | 3168909 | A1 | 17 May 2017 |
| | | | | CN | 110078065 | A | 02 August 2019 |
| | | | | US | 2017187041 | A1 | 29 June 2017 |
| | | | | KR | 20220026610 | A | 04 March 2022 |
| | | | | WO | 2016006617 | A1 | 14 January 2016 |
| | | | | EP | 3731316 | A1 | 28 October 2020 |
| | | | | CN | 110451499 | A | 15 November 2019 |
| | | | | JP | 2016105396 | A | 09 June 2016 |
| | | | | JP | 2016111021 | A | 20 June 2016 |
| | | | | JP | 2016178074 | A | 06 October 2016 |
| | | | | JP | 2016186912 | A | 27 October 2016 |
| | | | | JP | 2016184581 | A | 20 October 2016 |
| | | | | JP | 2016186913 | A | 27 October 2016 |
| | | | | JP | 2016186916 | A | 27 October 2016 |
| | | | | JP | 2016189319 | A | 04 November 2016 |
| | | | | JP | 2017010650 | A | 12 January 2017 |
| | | | | JP | 2017010651 | A | 12 January 2017 |
| | | | | EP | 3168909 | A4 | 21 June 2017 |
| | | | | CN | 106663808 | A8 | 07 July 2017 |
| | | | | JP | 6561790 | B2 | 21 August 2019 |
| | | | | CN | 106663808 | B | 06 September 2019 |
| | | | | JP | 6596959 | B2 | 30 October 2019 |
| | | | | JP | 6609959 | B2 | 27 November 2019 |
| | | | | JP | 6609960 | B2 | 27 November 2019 |
| | | | | JP | 6609961 | B2 | 27 November 2019 |
| | | | | JP | 6634720 | B2 | 22 January 2020 |
| | | | | JP | 6672755 | B2 | 25 March 2020 |
| | | | | JP | 2020047601 | A | 26 March 2020 |
| | | | | JP | 6707935 | B2 | 10 June 2020 |
| | | | | EP | 3168909 | B1 | 17 June 2020 |
| | | | | JP | 6759586 | B2 | 23 September 2020 |
| | | | | JP | 2021185582 | A | 09 December 2021 |
| | | | | US | 2022123308 | A1 | 21 April 2022 |
| | | | | US | 2022123309 | A1 | 21 April 2022 |
| | | | | US | 2022123310 | A1 | 21 April 2022 |
| | | | | US | 2022123311 | A1 | 21 April 2022 |
| | | | | KR | 20220076546 | A | 08 June 2022 |
| | | | | KR | 20220077161 | A | 08 June 2022 |
| | | | | KR | 20220078728 | A | 10 June 2022 |
| | | | | KR | 20220079703 | A | 13 June 2022 |
| | | | | KR | 102406753 | B1 | 08 June 2022 |
| CN | 111029528 | A | 17 April 2020 | None | | | |
| JP | 2001229914 | A | 24 August 2001 | JP | 3844931 | B2 | 15 November 2006 |
| US | 2002015888 | A1 | 07 February 2002 | JP | 2001332263 | A | 30 November 2001 |

Form PCT/ISA/210 (patent family annex) (January 2015)

INTERNATIONAL SEARCH REPORT
Information on patent family members

International application No.

**PCT/CN2022/079190**

| Patent document cited in search report | | Publication date (day/month/year) | Patent family member(s) | | | Publication date (day/month/year) |
|---|---|---|---|---|---|---|
| | | | EP | 1134827 | A2 | 19 September 2001 |
| | | | EP | 1134827 | A3 | 13 June 2007 |
| | | | JP | 2011258585 | A | 22 December 2011 |
| | | | JP | 2014099419 | A | 29 May 2014 |
| | | | JP | 5819148 | B2 | 18 November 2015 |
| CN | 114068864 | A | 18 February 2022 | None | | |

Form PCT/ISA/210 (patent family annex) (January 2015)